# EUROPÄISCHE PATENTSCHRIFT

(11) **EP 2 320 116 B1**
(45) Veröffentlichungstag und Bekanntmachung des Hinweises auf die Patenterteilung: **13.02.2013**
(21) Anmeldenummer: 09014035.1
(22) Anmeldetag: 10.11.2009
(51) Int. Cl.: F16L 23/04, F01N 13/18

(54) **Rohrleitungsverbindung**
Pipe conduit connection
Connexion de conduite

(43) Veröffentlichungstag der Anmeldung: 11.05.2011
(73) Patentinhaber: ElringKlinger AG, 72581 Dettingen (DE)
(72) Erfinder: Brenndörfer, Reinhard, 82538 Geretsried (DE)
(74) Vertreter: Hoeger, Stellrecht & Partner Patentanwälte

(56) Entgegenhaltungen:
- EP-A1- 1 248 027
- EP-A2- 0 509 546
- DE-C- 880 982
- DE-C1- 19 525 157
- US-A- 1 493 269

## Beschreibung

### Technisches Gebiet

Die Erfindung betrifft eine Rohrleitungsverbindung, umfassend eine erste Rohrleitung und eine zweite Rohrleitung, welche fluidführend miteinander verbunden sind, wobei die erste Rohrleitung ein erstes Flanschelement und die zweite Rohrleitung ein zweites Flanschelement aufweist, wobei das erste Flanschelement und das zweite Flanschelement jeweils einen Einbauraum für eine Dichtung ausbilden und wobei ein Befestigungsmittel das erste Flanschelement mit dem zweiten Flanschelement verbindet.

### Stand der Technik

Aus der unveröffentlichten EP 09 004 810.9 ist eine Rohrleitungsverbindung bekannt, bei der als Befestigungsmittel für die Rohrleitungen eine V-Schelle, nämlich eine V-Bandschelle, verwendet wird. Die V-Schelle liegt an Flanschelementen der Rohrleitungen an, welche zwischen sich eine einzelne Graphitdichtung verpressen.

Bei der gattungsbildenden Anordnung ist die Graphitdichtung als tragendes Bauteil ausgebildet. Bei äußerer Belastung wird die Graphitdichtung verformt und die Schließkraft der Rohrleitungsverbindung nimmt ab. Die Rohrleitungsverbindung wird gelockert und damit undicht. Hierdurch wird die Dichtwirkung verschlechtert.

Eine weitere gattungsgemäße Rohrleitungsverbindung ist aus der EP 1.248.027 bekannt.

### Darstellung der Erfindung

Der Erfindung liegt daher die Aufgabe zugrunde, eine Rohrleitungsverbindung der eingangs genannten Art derart auszugestalten und weiterzubilden, dass sie nach einfacher Montage auch bei zeitweise belasteten Rohrleitungen eine dauerhaft hohe Dichtheit zeigt.

Die vorliegende Erfindung löst die zuvor genannte Aufgabe durch eine Rohrleitungsverbindung mit den Merkmalen des Patentanspruchs 1.

Danach ist die Rohrleitungsverbindung dadurch gekennzeichnet, dass ein Begrenzungsmittel vorgesehen ist, welches als Widerlager ausgebildet ist, an dem die Flanschelemente mit ihren Stirnseiten anliegen, wobei beidseits des Begrenzungsmittels jeweils eine Dichtung angeordnet ist.

Erfindungsgemäß ist erkannt worden, dass ein Widerlager ein Mindestvolumen der Einbauräume sicherstellt. Die Dichtungen können nicht über ein vordefiniertes Maß hinaus verpresst oder deformiert werden, wenn auf die Rohrleitungen Lasten einwirken. Des Weiteren ist erkannt worden, dass ein Widerlager einen Kraftnebenschluss und damit eine Begrenzung der Belastung der Dichtungen bewirkt. Die Flanschelemente schließen durch direkten Kontakt der Stirnseiten wodurch eine definierte Endstellung entsteht. Nach dem Schließen der Flanschelemente wird jede weitere vom Spannsystem, nämlich vom Befestigungsmittel oder den Schrauben, eingeleitete Einspannkraft nur zur äußeren Fixierung der Rohrleitungsverbindung verwendet. Nach dem Schließen der Flanschelemente wird die Haltekraft der Flanschelemente nicht durch den Zustand der Dichtungen beeinflusst. Die innenliegenden Dichtungen werden durch ihre geometrische Auslegung und die Geometrie des Einbauraums definiert verpresst und nehmen eine gewünschte Geometrie an. Insoweit werden Leckagen oder Spalte erfindungsgemäß vermieden und eine dauerhafte Dichtheit realisiert.

Folglich ist die eingangs genannte Aufgabe gelöst.

Das Begrenzungsmittel könnte als von den Flanschelementen baulich getrennter Mittelflansch ausgestaltet sein. Bei der Montage stellt der Mittelflansch sicher, dass sich die Rohrleitungen und der Mittelflansch gegenseitig zentrieren. Es wird stets eine korrekte Anordnung der Dichtflächen gewährleistet, sogar wenn einige der Flanschelemente nicht rund sind, sondern insbesondere bei Servicevorgängen leicht verformt oder beschädigt wurden. Das gesamte Flanschsystem kann mit nur einer V-Schelle fixiert werden. Der Mittefflansch ist dabei zwischen den Flanschelementen eingespannt. Des Weiteren kann der Mittelflansch als Andockelement zur Befestigung weiterer Einbauten, wie Monolithen von Filtern oder Katalysatoren, verwendet werden.

Einer Rohrleitung könnte ein Leitblech zugeordnet sein, welches den Mittelflansch zwischen sich und der weiteren Rohrleitung aufnimmt. Das Leitblech führt den Mittelflansch bei der Montage. Das Leitblech kann lediglich durch Schweisspunkte an einer Rohrleitung befestigt werden. Es ist keine durchgehende Schweissnaht notwendig. Insoweit können hier Kosten gespart werden, da die Art der Schweissbefestigung keinen Einfluss auf die Dichtheit der Rohrleitungsverbindung hat. Die Flanschelemente, der Mittelflansch und das Leitblech können kostensparend aus Blechstreifen gewalzt und gebogen werden. Sie müssen nicht als geschlossene Ringe ausgeführt sein, sondern können am Stoß offen ausgebildet sein.

Das Befestigungsmittel könnte als U-förmige oder V-förmige Bandschelle ausgebildet sein. Ein solches Befestigungsmittel kann zwei Flanschelemente umgreifen und aneinanderziehen, indem nämlich der Durchmesser der Bandschelle vermindert wird.

Die Dichtung könnte als Graphitdichtung ausgestaltet sein. Graphitdichtungen sind weich und können sich daher unter geringem Kraftaufwand an eventuelle Dichtflächen anpassen. Hierbei werden auch relativ große Toleranzen und Formfehler der Flanschelemente ausgeglichen.

Die Graphitdichtung könnte als Graphitdichtring ausgebildet und aus einer Flechtpackung aus Graphitfolie gefertigt sein. Eine Flechtpackung aus Graphitfolie ist äußerst weich und kann sehr leicht in eine gewünschte Form verpresst werden. Bei einer Flechtpackung wird deren Flechtstruktur beim Verpressen der Graphitdichtung geschlossen, so dass die Graphitdichtung wie ein massiver gepresster Ring wirkt. Bei sehr geringer Kraftbeaufschlagung kann die Flechtpackung sich an unebene oder zerkratzte Dichtflächen anschmiegen und diese zuverlässig abdichten. Eine Flechtpackung erlaubt eine Kompensierung von großen Fertigungstoleranzen und Fehlem der Flanschelemente. Die Flanschelemente können vor diesem Hintergrund aus relativ dünnem Blech oder dünnwandigem Rohr gefertigt sein. Die Flanschelemente könnten gezogen, gedrückt, gerollt, gepresst oder geschweisst sein.

Die Graphitdichtung könnte dreifach diagonal geflochten sein. Diese Graphitdichtung zeichnet sich durch eine gute Querschnittsstabilität und dichte Flechtstruktur aus.

Die Graphitdichtung könnte zweifach diagonal geflochten sein. Diese Graphitdichtung zeichnet sich durch eine gute Elastizität aus.

Die Graphitdichtung könnte eine Stoßstelle aufweisen, an welcher zwei freie Enden der Graphitdichtung miteinander dichtend verpresst sind. Durch diese konkrete Ausgestaltung kann die Graphitdichtung wie ein Kolbenring nahezu kraftlos auf eine Rohrleitung auf- oder abgeschoben werden. Die Stoßstelle erlaubt eine Aufweitung des Graphitdichtrings, wenn die Rohrleitung sich in ihrem Außendurchmesser aufweitet. Durch die Verwendung einer Flechtpackung aus Graphitfolie ist es besonders vorteilhaft möglich, die zwei freien Enden wieder dichtend aneinander anzulegen, ohne dass deren Stoßstelle optisch erkennbar ist. Die Weichheit der Flechtpackung erlaubt diesen überraschenden Heilungseffekt an der Stoßstelle der Graphitdichtung. Vorzugsweise sind die freien Enden abgeschrägt ausgebildet, um eine große Anlagefläche füreinander auszubilden.

Die Rohrleitungen könnten einen Außendurchmesser von 100 bis 400 mm aufweisen. Überraschend können mit der hier beschriebenen Rohrleitungsverbindung, welche als Graphitdichtung eine weiche Flechtpackung aus Graphitfolie aufweist, Rohrleitungen zuverlässig dicht aneinander gekoppelt werden. Die Flanschelemente neigen nach Stauchung, Aufschweissen oder Aufdrücken auf eine Rohrleitung zu einer Welligkeit, die mit den bekannten Dichtkonzepten nicht ausgeglichen werden kann. Insbesondere bietet eine Schweißnaht auf einem Flanschelement einen Wulst aus, der abgeschliffen oder ausgeglichen werden muss, um eine zuverlässige Dichtheit zu bewirken. Die Flechtpackung kann überraschend stark nachverformt werden und gleicht überraschend auch gröbere Unebenheiten der Rohrleitungen bzw. Flanschelemente aus.

Am Begrenzungsmittel könnte ein Monolith befestigt sein, der als Funktionseinheit eines Katalysators ausgestaltet ist. Durch diese konkrete Ausgestaltung kann ein Katalysator auf einfache Weise montiert werden.

Die Rohrleitungsverbindung kann insbesondere in Abgasleitungen von Kraftfahrzeugen Verwendung finden. Derzeit wird die Hamstofftechnik im Rahmen der Abgasreinhaltung weiterentwickelt da seit 1. Oktober 2006 die Euro-4-Norm für Abgase gilt und bereits zum 1. Oktober 2009 die strengere Euro-5-Norm gelten wird. Bis zum Jahr 2012 ist damit zu rechnen, dass der europäische Hamstoffbedarf für Nutzfahrzeuge bereits bei etwa 3,5 Millionen Tonnen liegen wird.

Hamstoff-Wasser-Lösungen sind umweltschonende Chemikalien zur Abgasreinigung, welche bislang in Nutzfahrzeugen (insbesondere bei LKW und Omnibussen) verwendet werden. Hamstoff-Wasser-Lösungen werden zur Reduzierung von Stickoxiden auch in stationären Motoren und zur Rauchgasreinigung in Kraftwerken genutzt.

Für die Verwendung von Hamstoff-Wasser-Lösungen ist an Kraftfahrzeugen ein zusätzlicher Tank angebracht. Der Verbrauch von Hamstoff-Wasser-Lösung beträgt etwa 4-6 % des normalen Kraftstoffverbrauchs und entspricht bei schweren LKWs etwa 1,4 Liter auf einer Strecke von 100 km.

Eine bekannte Hamstoff-Wasser-Lösung ist AdBlue. AdBlue (DIN 70070/AUS32) ist der Markenname für eine wasserklare, synthetisch hergestellte 32,5 %-ige Lösung von hochreinem Hamstoff in demineralisiertem Wasser, die zur Nachbehandlung von Abgasen in einem SCR-Katalysator benutzt wird. Dabei wird durch selektive katalytische Reduktion (englisch *selective catalytic reduction,* SCR) der Ausstoß von Stickoxiden (NOx) um etwa 90 % (im Stationärbetrieb) reduziert. Der Einsatz von AdBlue im PKW-Bereich ist zur Zeit in der Testphase.

Das SCR-Verfahren nutzt Ammoniak, welches an Bord des Fahrzeugs aus Hamstoff gewonnen wird. Die in einem separaten Tank liegende Hamstoff-Wasser-Lösung wird z. B. mittels Dosierpumpe oder Injektor dosiert in den Abgasstrom eingespritzt und sorgt im SCR-Katalysator für eine chemische Reaktion. Hierbei werden nur die Stickoxide in Stickstoff und Wasserdampf umgewandelt. Das Verhältnis von Hamstofflösung zu Dieselkraftstoff beträgt etwa 1:20 bis 1:30

Überraschend eignet sich die hier beschriebene Rohneitungsverbindung zur Verwendung in einer Anlage, welche Hamstoff zur Reinigung von Abgasen verwendet. Überraschend eignet sich auch eine Graphitdichtung aus einer Flechtpackung aus Graphitfolie zur Verwendung in einer Anlage, welche Hamstoff zur Reinigung von Abgasen verwendet. Eine solche Graphitdichtung ist platzsparend.

Beim Einsprühen einer Hamstoff-Wasser-Lösung in die Abgasleitungen eines Kraftfahrzeugs entsteht ein Aerosol, das mit dem NOx im Abgas reagiert. Ein geringer Teil der Hamstoff-Wasser-Lösung verdampft jedoch nicht und kann aus Einsprühdüsen in die Flanschelementverbindungen des Stands der Technik tropfen. Dort kristallisiert der Hamstoff und bildet harte Beläge und Ablagerungen an den Leitungswänden sowie in allen Taschen und Spalten, in welche die Lösung eindringen kann. Die Hamstoff-Wasser-Lösung dringt durch Osmose auch in poröse Dichtungen ein oder rinnt in Fugen von Blechdichtungen. Die Kristallisation des Hamstoffs führt zu einer Verhärtung und Versprödung der betroffenen Bereiche, so dass keine Rückfederungseigenschaften mehr ausgebildet werden können. Bei für Abgasleitungen typischen wechselnden thermischen Belastungen bilden sich immer neue Spalte und Ritzen aus, in die Hamstoff eindringen kann. Schließlich kann der Hamstoff sogar nach außen treten und von Rohrleitungsverbindungen des Stands der Technik in Form von Stalaktiten oder Zapfen abragen.

Es hat sich gezeigt, dass Graphitdichtringe aus Flechtpackungen aus Graphitfolie dauerhaft elastisch bleiben und Hamstoff überraschend nicht in die deren Flechtstruktur eindringt, obwohl man dies erwarten würde. Schließlich besteht die Flechtstruktur aus einzelnen Segmenten, die aneinandergepresst sind. Infolge der guten Anschmiegfähigkeit der Graphitdichtringe an die teilweise unebenen Flanschelemente, werden sogar Ritzen und Spalten vermieden, in denen Hamstoff kristallisieren kann. Der zuvor beschriebene Effekt hat sich insbesondere bei Verwendung von AdBlue positiv gezeigt.

Es bsteht die Anforderung, dass einzelne Bauteile einer Rohrleitungsverbindung sicher in einem Gehäuse befestigbar, jedoch zu Service- und Recyclingzwecken leicht auszubauen sind.

Als Graphitdichtung wird eine sogenannte Graphitfolienpackung als Meterware von der Rolle verwendet. Es werden keine maßhaltigen Dichtringe vorgepresst und keine Presswerkzeuge benötigt. Die Gestaltung der Flanschelemente wird an den Normquerschnitt einer Graphitfolienpackung angepasst. Hierdurch ist die Graphitdichtung nicht abhängig von der Gestaltung der Stirnflächen, sondem nur vom Umfang einer Rohrleitung,

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung bevorzugter Ausführungsbeispiele der erfindungsgemäßen Lehre anhand der Zeichnung zu verweisen.

In Verbindung mit der Erläuterung der bevorzugten Ausführungsbeispiele anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine teilweise Schnittzeichnung einer Rohrleitungsverbindung mit einer U- bzw. V-förmigen Bandschelle,
- Fig. 2: eine teilweise Explosionsdarstellung der Rohrleitungsverbindung gemäß Fig. 1 ohne Bandschelle,
- Fig. 3: eine teilweise Schnittzeichnung einer zusammengefügten Rohrleitungsverbindung ohne Bandschelle,
- Fig. 4: eine vollständige Schnittzeichnung einer Rohrleitungsverbindung, in der ein Monolith als Funktionseinheit eines Katalysators aufgenommen ist, wobei der Monolith am Begrenzungsmittel befestigt ist,
- Fig. 5: zwei Ansichten einer dreifach diagonal geflochtenen Graphitdichtung und
- Fig. 6: zwei Ansichten einer zweifach diagonal geflochtenen Graphitdichtung.

### Ausführung der Erfindung

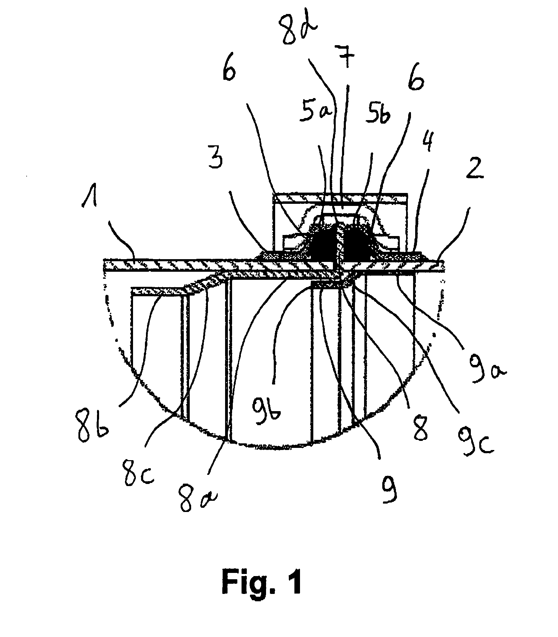

Fig. 1 zeigt eine Rohrleiungsverbindung, umfassend eine erste Rohrleitung 1 und eine zweite Rohrleitung 2, welche fluidführend miteinander verbunden sind, wobei die erste Rohrleitung 1 ein erstes Flanschelement 3 und die zweite Rohrleitung 2 ein zweites Flanschelement 4 aufweist, wobei das erste Flanschelement 3 und das zweite Flanschelement 4 jeweils einen Einbauraum 5a, 5b für jeweils eine Graphitdichtung 6 ausbilden und wobei ein Befestigungsmittel 7 das erste Flanschelement 3 mit dem zweiten Flanschelement 4 verbindet. Es ist ein Begrenzungsmittel 8 vorgesehen, welches als Widerlager ausgebildet ist, an dem die Flanschelemente 3, 4 mit ihren Stimseiten 3a, 4a anliegen, wobei beidseits des Begrenzungsmittels 8 jeweils eine Graphitdichung 6 angeordnet ist.

Das Befestigungsmittel 7 ist als U-förmige Bandschelle ausgebildet. Das Befestigungsmittel 7 umgreift die zwei Flanschelemente 3, 4 und zieht diese aneinander, indem nämlich der Durchmesser der Bandschelle vermindert wird.

Die Flanschelemente 3, 4 sind identisch und sind spiegelverkehrt gegeneinander gerichtet montiert. Der Querschnitt der Dichtflächen ist symmetrisch ausgebildet. Die Außenkonturen der Flanschelemente 3, 4 sind an das Backenprofil der Bandschelle angepasst.

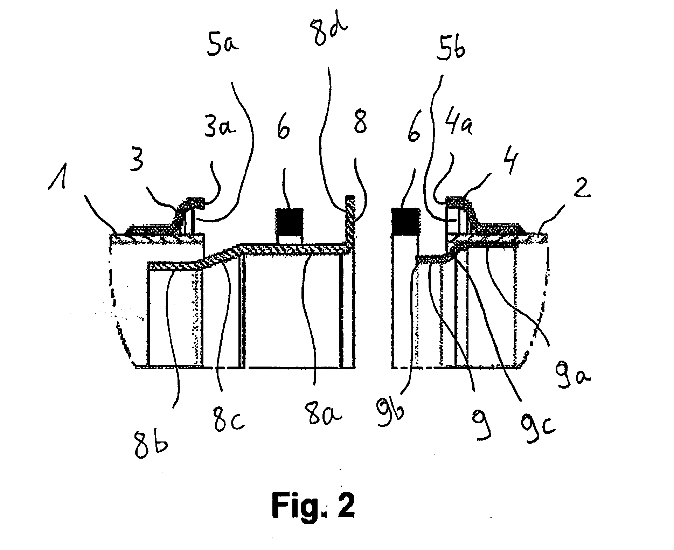

Fig. 2 zeigt in einer Explosiondarstellung der Rohrleitungsverbindung gemäß Fig. 1 die Montagefolge der Bauteile. Fig 2 zeigt, dass das Begrenzungsmittel 8 als von den Flanschelementen 3, 4 baulich getrennter Mittelflansch ausgestaltet ist. Das Begrenzungsmittel 8 ist als Widerlager ausgebildet, an dem die Flanschelemente 3, 4 mit ihren Stirnseiten 3a, 4a anliegen. Beidseits des Begrenzungsmittels 8 ist jeweils eine Graphitdichung 6 angeordnet, die als Graphitdichtring ausgebildet ist.

Der Mittelflansch weist ein erstes Ende 8a auf, welches einen radial nach außen abragenden Kranz 8d aufweist, an dem die Stirnseiten 3a, 4a beidseitig zur Anlage kommen. Ein zweites Ende 8b ragt unter Ausbildung eines radial nach innen orientierten Stufenversatzes 8c axial in Richtung der ersten Rohrleitung 1 ab. Hierdurch kann die erste Rohrleitung 1 problemlos auf den Mittelflansch aufgeschoben werden.

Der zweiten Rohrleitung 2 ist ein Leitblech 9 zugeordnet, welches den Mittelflansch zwischen sich und der ersten Rohrleitung 1 aufnimmt. Das Leitblech 9 ist hierzu mit einem ersten Ende 9a an der zweiten Rohrleitung 2 angebunden. Ein zweites Ende 9b ragt unter Ausbildung eines radial nach innen orientierten Stufenversatzes 9c axial in Richtung der ersten Rohrleitung 1 ab.

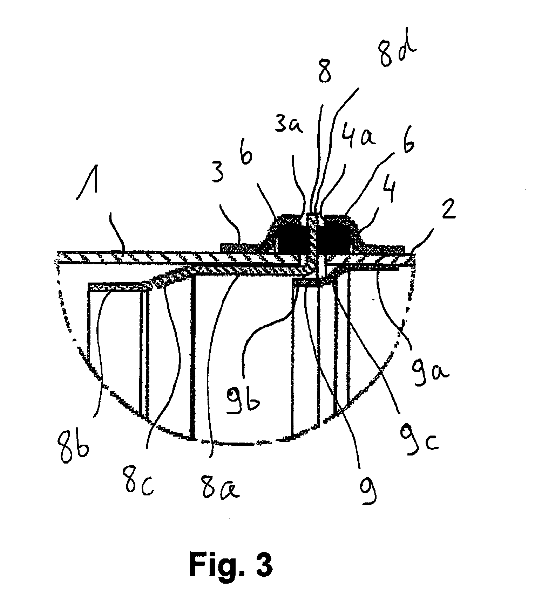

Fig. 3 zeigt die Rohrleitungsverbindung gemäß Fig. 1 ohne Befestigungsmittel 7, also ohne Bandschelle.

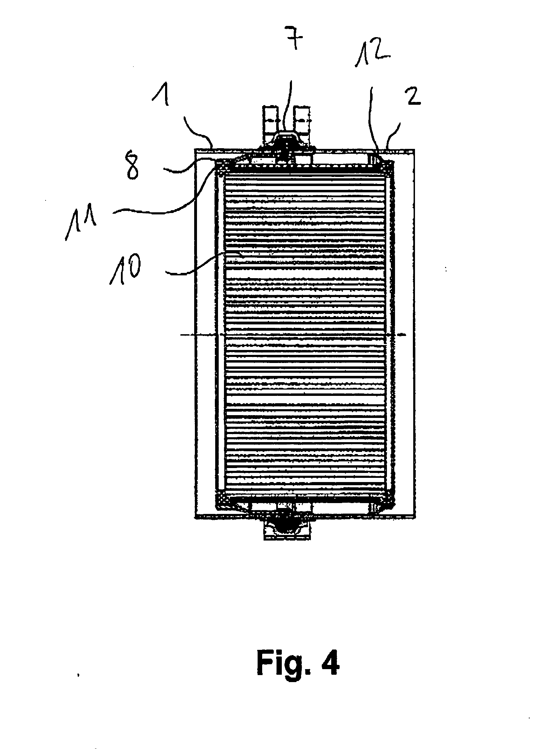

Fig. 4 zeigt eine Rohrleitungsverbindung, bei der am Mittelflansch ein Monolith 10 befestigt ist, der als Funktionseinheit eines Katalysators ausgestaltet ist. Der Mittelflansch bzw. das Begrenzungsmittel 8 dient somit als Andockelement für ein weiteres Bauteil, nämlich den Monolithen 10. Der Monolith 10 ist mit einem ersten Ende 11 am Begrenzungsmittel 8 befestigt. An seinem zweiten Ende 12 ist ein Stützelement angebracht, welches ihn gegen die Innenwandung der zweiten Rohrleitung 2 abstützt.

In den Fig. 1 bis 4 ist die Graphitdichtung 6 als Graphitdichtring ausgebildet und aus einer Flechtpackung aus Graphitfolie gefertigt. Eine Flechtpackung aus Graphitfolie ist äußerst weich und kann sehr leicht in eine gewünschte Form verpresst werden. Bei einer Flechtpackung wird deren Flechtstruktur beim Verpressen der Graphitdichtung 6 geschlossen, so dass die Graphitdichtung 6 wie ein massiver gepresster Ring wirkt. Bei sehr geringer Kraftbeaufschlagung kann die Flechtpackung sich an unebene oder zerkratzte Dichtflächen anschmiegen und diese zuverlässig abdichten. Eine Flechtpackung erlaubt eine Kompensierung von Fertigungstoleranzen und Fehlern der Flanschelemente 3, 4. Die Flanschelemente 3, 4 sind jeweils auf die Rohrleitungen 1, 2 aufgeschweisst und bestehen aus dünnem Blech.

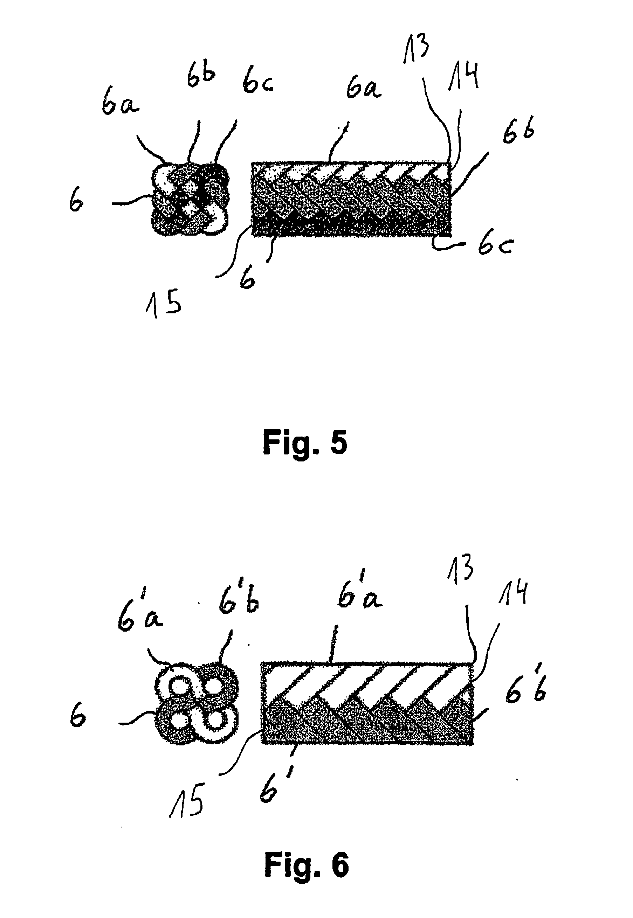

In den Fig. 5 und 6 sind zwei Graphitdichtungen 6, 6' gezeigt. Die Graphitdichtungen 6, 6' weisen je eine Stoßstelle 13 auf, an welcher zwei freie Enden 14, 15 der Graphitdichtungen 6, 6' miteinander dichtend verpresst sind. Durch diese konkrete Ausgestaltung kann eine Graphitdichtung 6, 6' wie ein Kolbenring nahezu kraftlos auf eine Rohrleitung 1, 2 oder ein Flanschelement 3, 4 auf- oder abgeschoben werden. Die Stoßstelle 13 der Graphitdichtungen 6, 6' erlaubt eine Aufweitung des Graphitdichtrings, wenn die Rohrleitung 1, 2 sich in ihrem Außendurchmesser aufweitet, Durch die Verwendung einer Flechtpackung aus Graphitfolie ist es besonders vorteilhaft möglich, die zwei freien Enden 14, 15 wieder dichtend aneinander anzulegen, ohne dass die Stoßstelle 13 einer Graphitdichtung 6, 6' optisch erkennbar ist. Die Weichheit der Flechtpackung erlaubt diesen überraschenden Heilungseffekt an der Stoßstelle 13 einer Graphitdichtung 6, 6'.

Die hier beschriebenen Graphitdichtungen 6, 6' sind bei Temperaturen von bis zu 500° C betriebstauglich und nahezu gegen alle Medien außer Sauerstoff beständig. Überraschend eignen sich die Graphitdichtungen 6, 6' aus einer Flechtpackung aus Graphitfolie zur Verwendung in einer Anlage, welche Hamstoff zur Reinigung von Abgasen verwendet.

Die hier beschriebene Rohrleitungsverbindung zeigt bei einem Außendurchmesser der Rohrleitungen 1, 2 von 120 mm bei einem Innendruck von 1 bar eine Leckage von 0,1 Liter/ Minute.

Fig. 5 zeigt beispielhaft eine dreifach diagonal geflochtene Graphitdichtung 6, die aus einer Flechtpackung aus Graphitfolie gefertigt ist. Die Graphitfolie umfasst mehrere miteinander verflochtene Flechtgame, wobei beispielhaft die Flechtgame 6a, 6b, 6c gekennzeichnet sind. Die Flechtpackung aus Graphitfolie ist äußerst weich und kann sehr leicht in eine gewünschte Form verpresst werden. Bei einer Flechtpackung wird deren Flechtstruktur, nämlich die Zwischenräume zwischen den Flechtgamen 6a, 6b, 6c, beim Verpressen der Graphitdichtung 6 geschlossen, so dass die Graphitdichtung wie ein massiver gepresster Ring wirkt. Diese Graphitdichtung 6 zeichnet sich durch eine gute Querschnittsstabilität und dichte Flechtstruktur aus. Fig. 5 zeigt zwei Ansichten der Graphitdichtung 6. Links in Fig. 5 ist eine Schnittansicht der Graphitdichtung 6 und rechts eine Draufsicht auf die Graphitdichtung 6 gezeigt.

Fig. 6 zeigt beispielhaft eine zweifach diagonal geflochtene Graphitdichtung 6', die aus einer Flechtpackung aus Graphitfolie gefertigt ist. Die Graphitfolie umfasst mehrere miteinander verflochtene Flechtgame, wobei beispielhaft die Flechtgame 6'a, 6'b gekennzeichnet sind. Die Flechtpackung aus Graphitfolie ist äußerst weich und kann sehr leicht in eine gewünschte Form verpresst werden. Bei einer Flechtpackung wird deren Flechtstruktur, nämlich die Zwischenräume zwischen den Flechtgamen 6'a, 6'b, beim Verpressen der Graphitdichtung 6' geschlossen, so dass die Graphitdichtung wie ein massiver gepresster Ring wirkt. Diese Graphitdichtung 6' zeichnet sich durch eine gute Elastizität aus. Fig. 6 zeigt zwei Ansichten der Graphitdichtung 6'. Links in Fig. 6 ist eine Schnittansicht der Graphitdichtung 6' und rechts eine Draufsicht auf die Graphitdichtung 6' gezeigt.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Ansprüche verwiesen.

Abschließend sei ganz besonders hervorgehoben, dass die zuvor gewählten Ausführungsbeispiele lediglich zur Erörterung der erfindungsgemäßen Lehre dienen, diese jedoch nicht auf diese Ausführungsbeispiele einschränken.

## Patentansprüche

1. Rohrleitungsverbindung, umfassend eine erste Rohrleitung (1) und eine zweite Rohrleitung (2), welche fluidführend miteinander verbunden sind, wobei die erste Rohrleitung (1) ein erstes Flanschelement (3) und die zweite Rohrleitung (2) ein zweites Flanschelement (4) aufweist, wobei das erste Flanschelement (3) und das zweite Flanschelement (4) jeweils einen Einbauraum (5a, 5b) für eine Dichtung (6, 6') ausbilden und wobei ein Befestigungsmittel (7) das erste Flanschelement (3) mit dem zweiten Flanschelement (4) verbindet,
**dadurch gekennzeichnet, dass** ein Begrenzungsmittel (8) vorgesehen ist, welches als Widerlager ausgebildet ist, an dem die Flanschelemente (3, 4) mit ihren Stirnseiten (3a, 4a) anliegen, wobei beidseits des Begrenzungsmittels (8) jeweils eine Dichtung (6, 6') angeordnet ist.

2. Rohrleitungsverbindung nach Anspruch 1, **dadurch gekennzeichnet, dass** das Begrenzungsmittel (8) als von den Flanschelementen (3, 4) baulich getrennter Mittelflansch ausgestaltet ist.

3. Rohrleitungsverbindung nach Anspruch 2, **dadurch gekennzeichnet, dass** der zweiten Rohrleitung (2) ein Leitblech (9) zugeordnet ist, welches den Mittelflansch zwischen sich und der ersten Rohrleitung (1) aufnimmt.

4. Rohrteitungsverbindung nach einem der Ansprüche 1 bis 3, **dadurch gekennzeichnet, dass** das Befestigungsmittel (7) als U-förmige oder V-förmige Bandschelle ausgebildet ist.

5. Rohrleitungsverbindung nach einem der Ansprüche 1 bis 4, **dadurch gekennzeichnet, dass** die Dichtung als Graphitdichtung (6, 6') ausgebildet ist.

6. Rohrieitungsverbindung nach Anspruch 5, **dadurch gekennzeichnet, dass** die Graphitdichtung (6, 6') als Graphitdichtring ausgebildet ist und aus einer Flechtpackung aus Graphitfolie gefertigt ist.

7. Rohneitungsverbindung nach Anspruch 6, **dadurch gekennzeichnet, dass** die Graphitdichtung (6) dreifach diagonal geflochten ist.

8. Rohrfeitungsverblndung nach Anspruch 6, **dadurch gekennzeichnet, dass** die Graphitdichtung (6') zweifach diagonal geflochten ist.

9. Rohrleitungsverbindung nach einem der Ansprüche 1 bis 8, **dadurch gekennzeichnet, dass** die Graphitdichtung (6, 6') eine Stoßstelle (13) aufweist, an welcher zwei freie Enden (14, 15) der Graphitdichtung (6, 6') miteinander dichtend verpresst sind.

10. Rohrleitungsverbindung nach einem der Ansprüche 1 bis 9, **dadurch gekennzeichnet, dass** die Rohrleitungen (1, 2) einen Außendurchmesser bis 400 mm aufweisen.

11. Rohrieitungsverbindung nach einem der Ansprüche 1 bis 10, **dadurch gekennzeichnet, dass** am Begrenzungsmittel (8) ein Monolith (10) befestigt ist, der als Funktionseinheit eines Katalysators ausgestaltet ist.

12. Verwendung einer Rohrleitungsverbindung nach einem der voranstehenden Ansprüche oder einer Graphitdichtung (6, 6') aus einer Flechtpackung aus Graphitfolie in einer Anlage, welche Harnstoff zur Reinigung von Abgasen verwendet.

## Claims

1. Pipe joint, comprising a first pipe (1) and a second pipe (2) which are connected to one another to convey fluid, wherein the first pipe (1) has a first flange element (3) and the second pipe (2) has a second flange element (4), wherein the first flange element (3) and the second flange element (4) each form an installation space (5a, 5b) for a seal (6, 6') and wherein a fastening means (7) connects the first flange element (3) to the second flange element (4), **characterised in that** a limiting means (8) is provided which is constructed as an abutment against which the flange elements (3, 4) bear with their end faces (3a, 4a), wherein a respective seal (6, 6') is disposed on each side of the limiting means (8).

2. Pipe joint as claimed in Claim 1, **characterised in that** the limiting means (8) is configured as a central flange structurally separated from the flange elements (3, 4).

3. Pipe joint as claimed in Claim 2, **characterised in that** there is associated with the second pipe (2) a guide plate (9) which receives the central flange between itself and the first pipe(1).

4. Pipe joint as claimed in any one of Claims 1 to 3, **characterised in that** the fastening means (7) is formed as a U-shaped or V-shaped band clip.

5. Pipe joint as claimed in any one of Claims 1 to 4, **characterised in that** the seal (6) is formed as a graphite seal (6, 6').

6. Pipe joint as claimed in Claim 5, **characterised in that** the graphite seal (6, 6') is formed as a graphite sealing ring and is produced from a braided packing made from graphite film.

7. Pipe joint as claimed in Claim 6, **characterised in that** the graphite seal (6, 6') is braided three times diagonally.

8. Pipe joint as claimed in Claim 6, **characterised in that** the graphite seal (6, 6') is braided twice diagonally.

9. Pipe joint as claimed in any one of Claims 1 to 8, **characterised in that** the graphite seal (6, 6') has a butt joint (13) at which two free ends (14, 15) of the graphite seal (6, 6') are pressed against one another to form a seal.

10. Pipe joint as claimed in any one of Claims 1 to 9, **characterised in that** the pipes (1, 2) have an external diameter of up to 400 mm.

11. Pipe joint as claimed in any one of Claims 1 to 10, **characterised in that** there is fastened on the limiting means (8) a monolith (10) which is configured as a functional unit of a catalyser.

12. Use of a pipe joint as claimed in any one of the preceding claims or of a graphite seal (6, 6') consisting of a braided packing made from graphite film in an installation using urea for purifying exhaust gases.

## Revendications

1. Raccordement de conduite, comprenant une première conduite (1) et une deuxième conduite(2), qui sont reliées l'une à l'autre de manière à acheminer un fluide, la première conduite (1) présentant un premier élément à bride (3) et la deuxième conduite (2) présentant un deuxième élément à bride (4), le premier élément à bride (3) et le deuxième élément à bride (4) constituant respectivement un espace de montage (5a, 5b) pour un joint d'étanchéité (6, 6') et un moyen de fixation (7) reliant le premier élément à bride (3) au deuxième élément à bride (4), **caractérisé en ce qu'**un moyen de limitation (8) est prévu, lequel est réalisé sous la forme d'un contre-palier, contre lequel reposent les éléments à bride (3, 4) par leurs côtés frontaux (3a, 4a), un joint d'étanchéité (6, 6') étant respectivement disposé de part et d'autre de l'élément de limitation (8).

2. Raccordement de conduite selon la revendication 1, **caractérisé en ce que** le moyen de limitation (8) est configuré sous la forme d'une bride centrale séparée d'un point de vue du montage des éléments à bride (3, 4).

3. Raccordement de conduite selon la revendication 2, **caractérisé en ce qu'**est associée à la deuxième conduite (2) une tôle conductrice (9), qui reçoit la bride centrale entre elle-même et la première conduite (1).

4. Raccordement de conduite selon l'une quelconque des revendications 1 à 3, **caractérisé en ce que** le moyen de fixation (7) est réalisé sous la forme d'un collier en forme de U ou en forme de V.

5. Raccordement de conduite selon l'une quelconque des revendications 1 à 4, **caractérisé en ce que** le joint d'étanchéité est réalisé sous la forme d'un joint d'étanchéité en graphite (6, 6').

6. Raccordement de conduite selon la revendication 5, **caractérisé en ce que** le joint d'étanchéité en graphite (6, 6') est réalisé sous la forme d'une bague d'étanchéité en graphite et est fabriqué à partir d'un emballage tressé en un film de graphite.

7. Raccordement de conduite selon la revendication 6, **caractérisé en ce que** le joint d'étanchéité en graphite (6) présente un tressage diagonal à trois rangs.

8. Raccordement de conduite selon la revendication 6, **caractérisé en ce que** le joint d'étanchéité de graphite (6') présente un tressage diagonal à deux rangs.

9. Raccordement de conduite selon l'une quelconque des revendications 1 à 8, **caractérisé en ce que** le joint d'étanchéité en graphite (6, 6') présente un aboutement (13), contre lequel deux extrémités libres (14, 15) du joint d'étanchéité en graphite (6, 6') sont pressées l'une contre l'autre de manière à assurer l'étanchéité.

10. Raccordement de conduite selon l'une quelconque des revendications 1 à 9, **caractérisé en ce que** les conduites (1, 2) présentent un diamètre extérieur pouvant aller jusqu'à 400 mm.

11. Raccordement de conduite selon l'une quelconque des revendications 1 à 10, **caractérisé en ce qu'**un monolithe (10) est fixé au niveau du moyen de limitation (8), qui est configuré sous la forme d'une unité fonctionnelle d'un catalyseur.

12. Utilisation d'un raccordement de conduite selon l'une quelconque des revendications précédentes ou d'un joint d'étanchéité en graphite (6, 6') constitué d'un emballage tressé en un film de graphite dans une installation qui utilise de l'urée afin de nettoyer les gaz d'échappement.
